# DEMANDE DE BREVET EUROPEEN

(11) **EP 4 478 132 A1**
(43) Date de publication de la demande: **18.12.2024**
(21) Numéro de dépôt: 23178675.7
(22) Date de dépôt: 12.06.2023
(51) Int. Cl.: G04B 19/04, G04B 19/32, G04C 17/00, G01D 13/26, G04B 19/30

(54) **AFFICHAGE LUMINEUX DE PIÈCE D'HORLOGERIE PAR COUPLAGE OPTIQUE VIA DES MICRO-STRUCTURES**

(71) Demandeur: The Swatch Group Research and Development Ltd, 2074 Marin (CH)
(72) Inventeur: GERNEZ, Cyrille, 2017 Boudry (CH)
(74) Mandataire: ICB SA

(57) **Abrégé**

Un aspect de l'invention concerne un dispositif d'affichage (100) de montre (1000) comportant au moins une source de lumière (200) et comportant, entre un cadran (300) porteur d'au moins une échelle de référence sur un côté supérieur (301) et une glace (400) du côté de l'utilisateur, un aiguillage coaxial (10) autour d'un axe de rotation (D) comportant au moins un premier indicateur lumineux (1) comportant un premier guide de lumière (11) agencé pour diffuser une partie de la lumière émise par ladite au moins une source de lumière (200), où le premier guide de lumière (11) comporte des premières micro-structures de couplage (110), qui sont agencées pour faire entrer la lumière dans le premier guide de lumière (11) et/ou pour faire sortir la lumière du premier guide de lumière (11).

## Description

### Domaine technique de l'invention

L'invention concerne un dispositif d'affichage de montre comportant au moins une source de lumière et comportant, entre un cadran porteur d'au moins une échelle de référence sur un côté supérieur et une glace du côté de l'utilisateur, un aiguillage coaxial autour d'un axe de rotation comportant au moins un premier indicateur lumineux comportant un premier guide de lumière agencé pour diffuser une partie de la lumière émise par ladite au moins une source de lumière.

L'invention concerne le domaine de l'affichage de pièces d'horlogerie, notamment des montres, et plus particulièrement de l'affichage lumineux.

### Arrière-plan technologique

Le document EP19220169 expose un principe d'illumination d'aiguille à l'aide de plusieurs sources lumineuses. Une première source, typiquement une LED, ou un groupe de LEDs, excite à distance une source secondaire, notamment une pastille comportant des pigments fluorescents déposée sous les aiguilles. Les spectres d'émission de la source primaire et d'excitation de la source secondaire doivent donc correspondre pour que le système soit efficace. Ceci limite le choix à des LEDs qui émettent suffisamment autour de 400 nm. Les pigments fluorescents ont en effet leurs pics d'absorption maximum dans les longueurs d'onde de l'ultra-violet. Ce même document décrit aussi la présence d'ouvertures dans la tête de l'aiguille des heures afin de laisser passer la lumière vers l'aiguille des minutes, ce qui complique évidemment la fabrication d'une telle aiguille.

### Résumé de l'invention

L'invention se propose de développer des indicateurs lumineux pour des pièces d'horlogerie, pour l'affichage de nuit ou en milieu faiblement éclairé, avec une alternative aux revêtements fluorescents ou phosphorescents de l'art antérieur.

A cet effet, l'invention concerne un dispositif d'affichage selon la revendication 1.

### Brève description des figures

Les buts, avantages et caractéristiques de l'invention apparaîtront mieux à la lecture de la description détaillée qui va suivre, en référence aux dessins annexés, où :

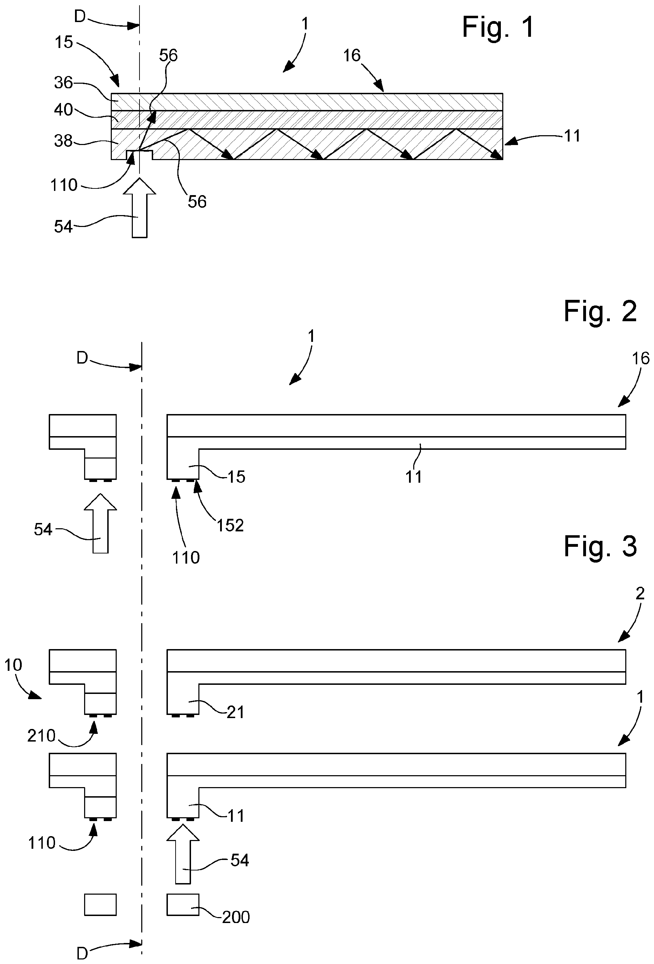

- la figure 1 est une vue schématique d'une première variante d'aiguille selon l'invention, en coupe passant par son axe de rotation ;
- la figure 2 est une vue schématique d'une deuxième variante d'aiguille selon l'invention, en coupe passant par son axe de rotation ;
- la figure 3 est une vue schématique d'un aiguillage coaxial selon l'invention, avec deux aiguilles superposées, en coupe passant par leur axe de rotation commun ;

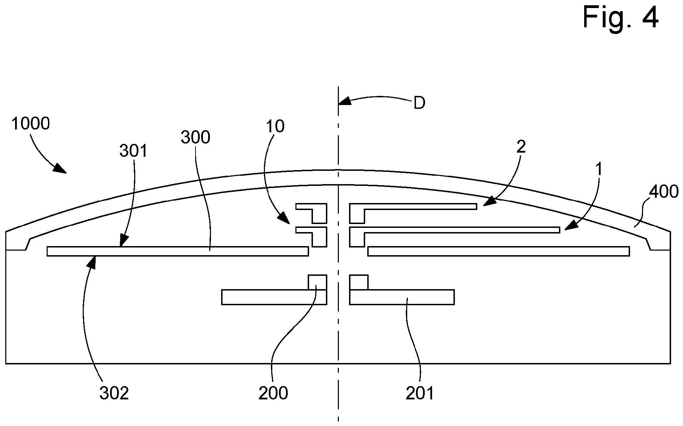

- la figure 4 est une vue schématique d'une montre comportant un aiguillage coaxial selon l'invention, avec deux aiguilles superposées illuminées par une source de lumière inférieure, en coupe passant par leur axe de rotation commun.

### Description détaillée de l'invention

L'invention concerne un affichage lumineux de pièce d'horlogerie par couplage optique via des micro-structures.

Le document EP3845974A1, incorporé ici par référence, décrit un indicateur mobile pour un dispositif d'affichage analogique, notamment un dispositif d'affichage de montre comprenant un ou plusieurs indicateurs mobiles tels des aiguilles. L'indicateur comprend une pièce à plusieurs couches incluant une couche métallique opaque et une couche guide de lumière transparente, et formant un corps et une tête de l'indicateur. La tête est centrée par rapport à un axe de rotation de l'indicateur et agencée pour recevoir un flux lumineux sur sa face inférieure opposée à l'utilisateur. Un matériau fluorescent est agencé sur la couche guide de lumière transparente au niveau de la tête de l'indicateur pour absorber au moins une partie de ce flux lumineux, et pour réémettre un second flux lumineux de fluorescence dans la couche guide de lumière transparente.

Plus particulièrement, le dispositif d'affichage selon ce document EP3845974A1 comporte un cadran, de tels indicateurs, disposés au-dessus du cadran c'est-à-dire du côté de la glace de la montre, visibles par l'utilisateur, les têtes respectives des indicateurs étant superposées et fixées à des arbres respectifs pour tourner autour d'un axe de rotation commun, et ce dispositif comporte une source stationnaire d'éclairage, qui est agencée pour éclairer par-dessous, c'est-à-dire sur un côté inférieur du cadran opposé à l'utilisateur et invisible de ce dernier sauf en cas de montre squelette ou mystérieuse, l'ensemble des têtes des indicateurs au moyen d'un flux lumineux sensiblement parallèle à l'axe de rotation commun et ayant une longueur d'onde plus petite que la longueur d'onde réémise par le matériau fluorescent. La source stationnaire d'éclairage peut comporter des diodes électroluminescentes, dites ci-après LEDs, et/ou des LEDs organiques, qui sont réparties autour desdits arbres et montées sur un élément à circuits imprimés, dit ci-après PCB, disposé au-dessous du cadran, ou encore des sources laser miniature de type VCSEL, pareillement implantées.

Sur une base similaire, et en variante, l'invention se propose de réaliser un affichage de montre comportant au moins une aiguille lumineuse, notamment par couplage optique via des micro-structures. Cette aiguille lumineuse peut, du fait de la présence des micro-structures, être plus simple que celle décrite en détail dans le document EP3845974A1 laquelle comporte nécessairement un matériau fluorescent, ce qui permet d'abaisser le coût de l'aiguille.

Un but particulier de cette invention est l'illumination à la demande des aiguilles d'une montre sans faire recours à des contacts électriques frotteurs.

Une première proposition concerne l'aiguille des heures. Sur certaines aiguilles, la tête d'aiguille est peu développée par rapport au corps d'aiguille, voire quasi inexistante, à savoir qu'il n'y a pas d'élargissement autour du trou par rapport au corps de l'aiguille ; il n'y a alors pas d'entrave à la circulation de la lumière vers l'aiguille des minutes. Un tel design permet d'éviter de créer des ouvertures et de devoir fabriquer un design complexe ; il faut juste éviter les fuites de lumière directe en cas de vision latérale ou plus rasante.

Une deuxième proposition est relative au couplage de la lumière dans le guide de lumière que comportent les aiguilles. De la même façon que la lumière peut sortir du guide de lumière grâce à des structures qui changent son trajet (prismes ou cônes par exemple), on peut utiliser ce même type de structures pour faire entrer la lumière dans le guide depuis les LEDs, notamment positionnées sur un PCB situé sous ou sur le cadran, ou constituant le cadran.

Cela est aussi valable avec une simple gravure de la surface qui modifie la rugosité de la surface. Ainsi, plutôt que de déposer une encre fluorescente qui complique le procédé, il est possible de graver des structures de couplage en même temps que les structures d'extraction directement dans un master utilisé pour répliquer ces structures sur le guide de lumière de l'aiguille.

Dans le cas courant d'un aiguillage comportant plusieurs aiguilles, plusieurs options peuvent être choisies.

Une première option consiste à uniformiser la luminosité d'au moins deux aiguilles voisines, et il faut envisager à cet effet des designs différents de zone de couplage (surface, forme, profondeur). Le fait de prévoir une surface de couplage suffisamment grande pour l'aiguille des minutes permet de toujours avoir un couplage lumineux sur cette aiguille, malgré la présence de l'aiguille des heures sur le chemin lumineux.

La mise en oeuvre d'un pigment fluorescent dans certaines aiguilles lumineuses est souvent contrariée par l'obtention d'une différence de couleur entre les deux aiguilles voisines. Même si une grande partie de la lumière couplée dans le guide de lumière provient de la pastille fluorescente, une partie peut être couplée sans dispositif particulier, par exemple via les bords du guide. Ceci implique un mélange de couleur entre la lumière émise par les pigments fluorescents et la lumière originale des LED. Les LED UV émettent par exemple aussi dans le bleu. Ce mélange de couleur, difficilement contrôlable et différent entre les aiguilles des heures et des minutes, n'existe pas si on couple via des microstructures puisqu'il n'y a pas de changement de couleur par ces microstructures.

Une autre variante consiste à tirer avantage de cet effet pour avoir des aiguilles de couleurs différentes. Ceci peut se faire en accentuant le mélange de couleur entre fluorescents et primaire de la LED, ce qui reste cependant difficilement contrôlable. Plus simplement, on peut utiliser des pastilles fluorescentes émettant dans des couleurs différentes.

Une autre variante encore consiste à remplacer la matière fluorescente par une matière phosphorescente. Ainsi après une courte période d'excitation, l'utilisateur ne verra que la lumière phosphorescente et donc la même couleur sur les deux aiguilles. En plus cette approche peut être avantageuse pour avoir une durée maximum d'effet lumineux avec un bilan énergétique minimum. On peut aussi compter en partie sur la lumière ambiante que voient la montre et les aiguilles, pour recharger la matière phosphorescente et produire de la lumière en début de soirée.

Ainsi, pour assurer un affichage lumineux sans être nécessairement tributaire de l'emploi de matériaux luminescents ou phosphorescents, qui restent utilisables en complément de l'invention pour des variantes colorées, l'invention concerne plus particulièrement un dispositif d'affichage 100 de montre 1000 comportant au moins une source de lumière 200 et comportant un aiguillage 10, entre un cadran 300 porteur d'au moins une échelle de référence sur un côté supérieur 301 et une glace 400 du côté de l'utilisateur. Cet aiguillage 10 est mobile autour d'un axe de rotation D, et, quand il comporte plusieurs indicateurs, est coaxial autour de cet axe de rotation D. L'aiguillage 10 comporte au moins un premier indicateur lumineux 1, comportant un premier guide de lumière 11 agencé pour diffuser une partie de la lumière émise par cette au moins une source de lumière 200.

Selon l'invention, le premier guide de lumière 11 comporte des premières micro-structures de couplage 110, qui sont agencées pour faire entrer la lumière dans le premier guide de lumière 11 et/ou pour faire sortir la lumière du premier guide de lumière 11.

Plus particulièrement, le au moins un premier indicateur lumineux 1 comporte plusieurs couches incluant une couche métallique opaque 36 et une couche transparente 38 formant le premier guide de lumière 11, et formant une première tête 15 et un premier corps 16, la première tête 15 étant centrée par rapport audit axe de rotation D et agencée pour recevoir un flux lumineux 54 sur une première face inférieure 152 non visible par l'utilisateur. Et de telles premières micro-structures de couplage 110 sont agencées sur ou dans la couche transparente guide de lumière, au niveau de la tête 15, pour assurer le couplage d'entrée dans la couche transparente guide de lumière.

Dans une variante, un matériau fluorescent est agencé sur ou dans la couche guide de lumière transparente au niveau de la tête 15.

Dans une autre variante, un matériau phosphorescent est agencé sur ou dans la couche guide de lumière transparente au niveau de la tête 15.

Plus particulièrement, l'aiguillage coaxial 10 comporte, entre le premier indicateur lumineux 1 et la glace 400, au moins un deuxième indicateur lumineux 2 comportant un deuxième guide de lumière 21 agencé pour diffuser une partie de la lumière émise par la au moins une source de lumière 200 et/ou par le premier indicateur lumineux 1. Et le deuxième guide de lumière 21 comporte des deuxièmes micro-structures de couplage 210, qui sont agencées pour faire entrer la lumière dans le deuxième guide de lumière 21 et/ou pour faire sortir la lumière du deuxième guide de lumière 21.

Plus particulièrement, l'aiguillage coaxial 10 comporte, entre le premier indicateur lumineux 1 et la glace 400, une pluralité d'indicateurs lumineux superposés et coaxiaux, chacun comportant un guide de lumière agencé pour diffuser une partie de la lumière émise par la au moins une source de lumière 200 et/ou par l'indicateur lumineux placé en-dessous de lui du côté opposé à la glace 400, et chacun comportant des micro-structures de couplage, qui sont agencées pour faire entrer la lumière dans le guide de lumière et/ou pour faire sortir la lumière du guide de lumière.

Plus particulièrement, au moins un indicateur lumineux, que comporte cet aiguillage coaxial 10, comporte plusieurs couches incluant une couche métallique opaque et une couche transparente formant un guide de lumière, et formant une tête et un corps, la tête étant centrée par rapport à l'axe de rotation D et agencée pour recevoir un flux lumineux 54 sur une première face inférieure non visible par l'utilisateur. Et de telles micro-structures de couplage sont agencées sur ou dans la couche transparente guide de lumière au niveau de la tête pour absorber au moins une partie du flux lumineux et pour réémettre un second flux lumineux dans la couche transparente guide de lumière.

Plus particulièrement, un matériau fluorescent est agencé sur ou dans la couche transparente guide de lumière d'au moins un indicateur lumineux, que comporte l'aiguillage coaxial 10, au niveau de la tête pour absorber au moins une partie du flux lumineux et pour réémettre un second flux lumineux de fluorescence dans la couche transparente guide de lumière.

Plus particulièrement, un matériau phosphorescent est agencé sur ou dans la couche transparente guide de lumière d'au moins un indicateur lumineux, que comporte l'aiguillage coaxial 10, au niveau de la tête pour absorber au moins une partie du flux lumineux et pour réémettre un second flux lumineux de phosphorescence dans la couche transparente guide de lumière.

Dans une variante, l'interposition entre la source de lumière 200 et l'indicateur lumineux d'un matériau fluorescent ou phosphorescent permet une colorisation facile, toutefois au détriment de la solution permettant le couplage de la lumière, procurée par le matériau fluorescent contre le guide.

Plus particulièrement, l'indicateur le plus proche de la glace 400 comporte une surface de couplage, regroupant ses micro-structures de couplage, qui est supérieure à la surface de couplage de l'indicateur immédiatement inférieur, du côté opposé à la glace 400.

Plus particulièrement, au moins un indicateur lumineux, que comporte l'aiguillage coaxial 10, comporte une couche guide de lumière transparente, qui est agencée pour produire une réflexion totale interne des rayons lumineux du second flux lumineux sensiblement perpendiculairement audit axe de rotation D.

Plus particulièrement, au moins un indicateur lumineux, que comporte l'aiguillage coaxial 10, comporte plusieurs couches incluant une couche métallique opaque et une couche transparente formant un guide de lumière, et comporte une couche d'isolation optique entre la couche métallique opaque et la couche transparente guide de lumière. Plus particulièrement et non limitativement, on utilise une colle, notamment une résine, pour assembler la partie métallique de l'aiguille avec la partie guide de lumière, et cette colle ou résine fait office de couche d'isolation, avec un indice optique inférieur à celui du guide de lumière. Et l'écart Δn entre l'indice de réfraction de la couche d'isolation optique et l'indice de réfraction de la couche transparente guide de lumière est compris dans l'intervalle allant de 0,1 à 0,5, bornes comprises. De préférence, mais non limitativement, on utilise à cet effet des résines d'indice supérieur ou égal à 1,1.

Plus particulièrement, la couche d'isolation optique a une épaisseur comprise dans l'intervalle allant de de 5 µm à 15 µm. Cela correspond à l'utilisation d'une résine liquide. Pour d'autres utilisations horlogères telles que pendules ou horloges, où l'on est moins limité par l'encombrement en épaisseur, il est possible d'utiliser des résines en film, dont l'épaisseur maximale est alors limitée à 100 µm.

Plus particulièrement, au moins un indicateur lumineux, que comporte l'aiguillage coaxial 10, comporte une face supérieure et une face inférieure planes, perpendiculaires à l'axe de rotation D.

Plus particulièrement, au moins un indicateur lumineux, que comporte l'aiguillage coaxial 10, comporte une tête comportant un alésage central dans lequel est arrangée une douille en matière opaque.

Plus particulièrement, l'aiguillage coaxial 10 comporte, entre le premier indicateur lumineux 1 et la glace 400, une pluralité d'indicateurs lumineux superposés et coaxiaux, chacun comportant une tête autour de l'axe de rotation D et un corps s'étendant sensiblement perpendiculairement à l'axe de rotation D, et un indicateur inférieur situé plus près du cadran 300 qu'un indicateur supérieur situé immédiatement au-dessus de cet indicateur inférieur, du côté de la glace 400, comporte au moins un orifice secondaire arrangé autour d'un alésage central que comporte sa tête, de sorte de permettre audit flux lumineux de traverser l'indicateur inférieur au travers de cet au moins un orifice secondaire, pour qu'au moins une partie du flux lumineux soit absorbée par le guide de lumière de l'indicateur supérieur.

Plus particulièrement, la au moins une source de lumière 200 est positionnée sous le cadran 300 au voisinage d'un côté inférieur 302 du cadran 300 opposé à la glace 400 par rapport audit cadran 300, ou est encastrée dans le cadran 300, ou est positionnée sur un PCB 201 positionné sous le cadran 300 au voisinage du côté inférieur 302 du cadran 300.

Plus particulièrement encore, la au moins une source de lumière 200 est une source stationnaire d'éclairage qui comporte des diodes électroluminescentes et/ou des diodes électroluminescentes organiques et/ou des sources laser miniatures type VCSEL qui sont réparties autour de l'axe de rotation D.

Plus particulièrement, au moins un indicateur lumineux, que comporte l'aiguillage coaxial 10, comporte au moins un indicateur lumineux dont le guide de lumière comporte de la matière fluorescente. Et la source de lumière 200 est une source stationnaire d'éclairage agencée pour éclairer par-dessous l'ensemble des têtes des indicateurs, que comporte cet aiguillage coaxial 10, au moyen d'un flux lumineux sensiblement parallèle à l'axe de rotation D et ayant une longueur d'onde plus petite que la longueur d'onde réémise par le matériau fluorescent.

Plus particulièrement, au moins un indicateur lumineux, que comporte l'aiguillage coaxial 10, comporte au moins deux indicateurs lumineux dont les guides de lumière comportent de la matière fluorescente, émettant dans des couleurs différentes.

L'invention concerne encore une montre 1000, comprenant au moins un tel dispositif d'affichage 100.

Plus particulièrement, au moins un indicateur, que comporte cet aiguillage coaxial 10, est une aiguille lumineuse.

Plus particulièrement, au moins un indicateur, que comporte cet aiguillage coaxial 10, est un disque.

En somme, l'invention permet un couplage de la lumière qui se fait directement grâce aux micro-structures. Il n'est plus nécessaire d'effectuer un couplage de lumière par absorption/réémission via de la matière fluorescente. Un emploi de micro-structures selon l'invention, en cumul avec des éléments fluorescents ou phosphorescents, permet néanmoins l'obtention de certains effets colorés particuliers.

## Revendications

1. Dispositif d'affichage (100) de montre (1000) comportant au moins une source de lumière (200) et comportant, entre un cadran (300) porteur d'au moins une échelle de référence sur un côté supérieur (301) et une glace (400) du côté de l'utilisateur, un aiguillage coaxial (10) autour d'un axe de rotation (D) comportant au moins un premier indicateur lumineux (1) comportant un premier guide de lumière (11) agencé pour diffuser une partie de la lumière émise par ladite au moins une source de lumière (200), **caractérisé en ce que** ledit premier guide de lumière (11) comporte des premières micro-structures de couplage (110), qui sont agencées pour faire entrer la lumière dans ledit premier guide de lumière (11) et/ou pour faire sortir la lumière dudit premier guide de lumière (11).

2. Dispositif d'affichage (100) selon la revendication 1, **caractérisé en ce que** ledit au moins un premier indicateur lumineux (1) comporte plusieurs couches incluant une couche métallique opaque (36) et une couche transparente formant ledit premier guide de lumière (11), et formant une première tête (15) et un premier corps (16), ladite première tête (15) étant centrée par rapport audit axe de rotation (D) et agencée pour recevoir un flux lumineux sur une première face inférieure (152) non visible par l'utilisateur, et **en ce que** des dites premières micro-structures de couplage (110) sont agencées sur ou dans la couche transparente guide de lumière au niveau de ladite tête (15) pour assurer le couplage d'entrée dans ladite couche transparente guide de lumière.

3. Dispositif d'affichage (100) selon la revendication 1 ou 2, **caractérisé en ce que** ledit aiguillage coaxial (10) comporte, entre ledit premier indicateur lumineux (1) et ladite glace (400), au moins un deuxième indicateur lumineux (2) comportant un deuxième guide de lumière (21) agencé pour diffuser une partie de la lumière émise par ladite au moins une source de lumière (200) et/ou par ledit premier indicateur lumineux (1), et **en ce que** ledit deuxième guide de lumière (21) comporte des deuxièmes micro-structures de couplage (210), qui sont agencées pour faire entrer la lumière dans ledit deuxième guide de lumière (21) et/ou pour faire sortir la lumière dudit deuxième guide de lumière (21).

4. Dispositif d'affichage (100) selon l'une des revendications 1 à 3, **caractérisé en ce que** ledit aiguillage coaxial (10) comporte, entre ledit premier indicateur lumineux (1) et ladite glace (400), une pluralité d'indicateurs lumineux superposés et coaxiaux, chacun comportant un guide de lumière agencé pour diffuser une partie de la lumière émise par ladite au moins une source de lumière (200) et/ou par l'indicateur lumineux placé en-dessous de lui du côté opposé à ladite glace (400), et chacun comportant des micro-structures de couplage, qui sont agencées pour faire entrer la lumière dans ledit guide de lumière et/ou pour faire sortir la lumière dudit guide de lumière.

5. Dispositif d'affichage (100) selon l'une des revendications 1 à 4, **caractérisé en ce qu'**au moins un indicateur lumineux, que comporte ledit aiguillage coaxial (10), comporte plusieurs couches incluant une couche métallique opaque (36) et une couche transparente formant un guide de lumière, et formant une tête et un corps, ladite tête étant centrée par rapport audit axe de rotation (D) et agencée pour recevoir un flux lumineux sur une première face inférieure non visible par l'utilisateur, et **en ce que** des dites micro-structures de couplage sont agencées sur ou dans la couche transparente guide de lumière au niveau de ladite tête pour absorber au moins une partie dudit flux lumineux et pour réémettre un second flux lumineux dans ladite couche transparente guide de lumière.

6. Dispositif d'affichage (100) selon la revendication 5, **caractérisé en ce qu'**un matériau fluorescent ou phosphorescent est agencé sur ou dans la couche transparente guide de lumière (38) d'au moins un indicateur lumineux, que comporte ledit aiguillage coaxial (10), au niveau de ladite tête pour absorber au moins une partie dudit flux lumineux et pour réémettre un second flux lumineux de fluorescence, respectivement de phosphorescence, dans la couche transparente guide de lumière.

7. Dispositif d'affichage (100) selon l'une des revendications 1 à 6, **caractérisé en ce que** l'indicateur le plus proche de ladite glace (400) comporte une surface de couplage, regroupant ses micro-structures de couplage, qui est supérieure à la surface de couplage de l'indicateur immédiatement inférieur, du côté opposé à ladite glace (400).

8. Dispositif d'affichage (100) selon la revendication 5 ou 6, **caractérisé en ce qu'**au moins un indicateur lumineux, que comporte ledit aiguillage coaxial (10), comporte une couche guide de lumière transparente (38), qui est agencée pour produire une réflexion totale interne des rayons lumineux du second flux lumineux sensiblement perpendiculairement audit axe de rotation (D).

9. Dispositif d'affichage (100) selon l'une quelconque des revendications 1 à 8, **caractérisé en ce qu'**au moins un indicateur lumineux, que comporte ledit aiguillage coaxial (10), comporte plusieurs couches incluant une couche métallique opaque (36) et une couche transparente formant un guide de lumière (38), et comporte une couche d'isolation optique (40) entre ladite couche métallique opaque (36) et la couche transparente guide de lumière (38), et **en ce que** l'écart Δn entre l'indice de réfraction de la couche d'isolation optique et l'indice de réfraction de la couche transparente guide de lumière (38) est compris dans l'intervalle allant de 0,1 à 0,5, bornes comprises.

10. Dispositif d'affichage (100) selon la revendication 9, **caractérisé en ce que** ladite couche d'isolation optique (40) a une épaisseur comprise dans l'intervalle allant de 5 µm à 15 µm.

11. Dispositif d'affichage (100) selon l'une des revendications 1 à 10, **caractérisé en ce qu'**au moins un indicateur lumineux, que comporte ledit aiguillage coaxial (10), comporte une face supérieure et une face inférieure planes, perpendiculaires audit axe de rotation (D).

12. Dispositif d'affichage (100) selon l'une des revendications 1 à 11, **caractérisé en ce qu'**au moins un indicateur lumineux, que comporte ledit aiguillage coaxial (10), comporte une tête comportant un alésage central dans lequel est arrangée une douille en matière opaque.

13. Dispositif d'affichage (100) selon l'une des revendications 1 à 12, **caractérisé en ce que** ledit aiguillage coaxial (10) comporte, entre ledit premier indicateur lumineux (1) et ladite glace (400), une pluralité d'indicateurs lumineux superposés et coaxiaux, chacun comportant une tête autour dudit axe de rotation (D) et un corps s'étendant sensiblement perpendiculairement audit axe de rotation (D), et **en ce qu'**un indicateur inférieur situé plus près dudit cadran (300) qu'un indicateur supérieur situé immédiatement au-dessus dudit indicateur inférieur, du côté de ladite glace (400), comporte au moins un orifice secondaire arrangé autour d'un alésage central que comporte sa dite tête, de sorte de permettre audit flux lumineux de traverser ledit indicateur inférieur au travers dudit au moins un orifice secondaire pour qu'au moins une partie dudit flux lumineux soit absorbée par le guide de lumière dudit indicateur supérieur.

14. Dispositif d'affichage (100) selon l'une des revendications 1 à 13, **caractérisé en ce que** ladite au moins une source de lumière (200) est positionnée sous ledit cadran (300) au voisinage d'un côté inférieur (302) dudit cadran (300) opposé à ladite glace (400) par rapport audit cadran (300), ou est encastrée dans ledit cadran (300), ou est positionnée sur un PCB (201) positionné sous ledit cadran (300) au voisinage dudit côté inférieur (302) dudit cadran (300).

15. Dispositif selon la revendication 14, **caractérisé en ce que** ladite au moins une source de lumière (200) est une source stationnaire d'éclairage qui comporte des diodes électroluminescentes et/ou des diodes électroluminescentes organiques et/ou des sources laser miniatures type VCSEL qui sont réparties autour dudit axe de rotation (D).

16. Dispositif d'affichage (100) selon l'une des revendications 1 à 15, **caractérisé en ce qu'**au moins un indicateur lumineux, que comporte ledit aiguillage coaxial (10), comporte au moins un indicateur lumineux dont le guide de lumière comporte de la matière fluorescente, et **en ce que** ladite source de lumière (200) est une source stationnaire d'éclairage agencée pour éclairer par-dessous l'ensemble des têtes des indicateurs, que comporte ledit aiguillage coaxial (10), au moyen d'un flux lumineux sensiblement parallèle audit axe de rotation (D) et ayant une longueur d'onde plus petite que la longueur d'onde réémise par ledit matériau fluorescent.

17. Dispositif d'affichage (100) selon l'une des revendications 1 à 16, **caractérisé en ce qu'**au moins un indicateur lumineux, que comporte ledit aiguillage coaxial (10), comporte au moins deux indicateurs lumineux dont les guides de lumière comportent de la matière fluorescente, émettant dans des couleurs différentes.

18. Montre (1000) comprenant au moins un dispositif d'affichage (100) selon l'une quelconque des revendications 1 à 17, **caractérisée en ce qu'**au moins un indicateur, que comporte ledit aiguillage coaxial (10), est une aiguille lumineuse.
